# DEMANDE DE BREVET EUROPEEN

(11) **EP 1 588 985 A1**
(43) Date de publication de la demande: **26.10.2005**
(21) Numéro de dépôt: 05290153.5
(22) Date de dépôt: 24.01.2005
(51) Int. Cl.: C01G 49/14

(54) **Procédé de fluidisation de sulfate ferreux par des produits à base de silice**

(30) Priorité: 04.02.2004 FR 0401052
(71) Demandeur: HOLCIM (Belgique), 7034 Mons-Obourg (BE)
(72) Inventeur: Degre, Geofrrey, 7000 Mons (BE); Duron, Jacques, 62200 Boulogne sur Mer (FR); Vecoven, Jacques, 59148 Punes les Raches (FR)
(74) Mandataire: Fruchard, Guy

(57) **Abrégé**

Le procédé de fluidisation de sulfate ferreux humide heptahydraté selon l'invention comporte l'étape d'ajouter à du sulfate ferreux humide une quantité suffisante de produit déshydratant à base de silice compris dans le groupe comprenant les cendres volantes résultant du fonctionnement d'une centrale thermique, et les fumées de silice provenant de l'industrie du silicium.

## Description

La présente invention concerne un procédé de fluidisation de sulfate ferreux humide heptahydraté.

### ARRIERE PLAN DE L'INVENTION

On connaît de nombreuses applications du sulfate ferreux heptahydraté, en particulier pour la réduction du chrome hexavalent du ciment lors de son utilisation dans des bétons.

Dans cette application le sulfate ferreux est rajouté en quantité très faible dans le ciment (de l'ordre de quelques pour mille) et il est donc nécessaire de pouvoir le doser selon des quantités précises. Toutefois lors de sa production, le sulfate ferreux se présente sous forme d'une pâte humide très difficile à manipuler et donc très difficile à doser et très difficile à mélanger avec le ciment. Ce sulfate ferreux pâteux sera nommé dans la suite du document « sulfate ferreux humide ». Pour fluidiser le sulfate ferreux humide, il est connu de procéder à un séchage de celui-ci, par exemple en le faisant passer dans un tambour à air chaud en le mélangeant au préalable avec du sulfate ferreux déjà séché se présentant sous la forme d'une semoule fluide. Toutefois, lors du séchage le sulfate ferreux humide perd sa forme heptahydratée pour passer sous une forme monohydratée peu soluble donc peu apte à réduire le chrome hexavalent du ciment. Le sulfate ferreux fluidisé obtenu selon ce procédé est donc inadapté pour le traitement du ciment.

On connaît également du document US 2 771 342 un procédé de séchage à froid du sulfate ferreux humide heptahydraté consistant à rajouter du carbonate de calcium finement broyé dans le sulfate ferreux humide. Le carbonate de calcium réagit avec le sulfate ferreux humide à caractère acide et neutralise ses propriétés réductrices de sorte que le produit ainsi obtenu est également impropre à une utilisation dans le ciment pour réduire le chrome hexavalent.

Le document EP-A-321 747 décrit également l'obtention de sulfate ferreux fluidisé en mélangeant au sulfate ferreux humide une quantité appropriée de lignite finement broyée. Les propriétés réductrices du sulfate ferreux ne sont pas affectées mais la matière organique introduite dans le ciment agit négativement sur les propriétés rhéologiques et mécaniques des bétons réalisés avec le ciment ainsi traité.

On connaît également des déshydratants comprenant un gel de silice sous forme de granulés. Ce produit est satisfaisant du point de vue technique mais son coût est prohibitif pour une utilisation pour le traitement du ciment.

### OBJET DE L'INVENTION

Un but de l'invention est de proposer un procédé de fluidisation du sulfate ferreux humide heptahydraté permettant de conserver à celui-ci ses propriétés réductrices du chrome hexavalent et pouvant être mélangé avec du ciment sans nuire aux propriétés mécaniques du béton réalisé avec ce ciment et sans augmenter de façon notable le coût du ciment.

### RESUME DE L'INVENTION

En vue de la réalisation de ce but on propose selon l'invention un procédé de fluidisation de sulfate ferreux humide heptahydraté comportant l'étape d'ajouter à du sulfate ferreux humide une quantité suffisante de produit déshydratant à base de silice compris dans le groupe comprenant les cendres volantes et les fumées de silice. On a en effet constaté que ces produits ne diminuaient pas les propriétés réductrices du sulfate ferreux. En outre, ces produits étant déjà utilisés dans la fabrication des ciments selon des quantités supérieures à celles qui sont amenées dans le ciment par l'introduction des sulfates ferreux fluidisés, on est assuré que les propriétés mécaniques du béton obtenu par l'utilisation d'un ciment traité avec le sulfate ferreux de l'invention, sont satisfaisantes. De plus la quantité de ces produits introduite dans le sulfate ferreux humide peut être déduite de la composition du ciment de sorte que la fluidisation du sulfate ferreux humide est alors réalisée sans coût supplémentaire.

### DESCRIPTION DETAILLEE DE L'INVENTION

Selon un premier mode de mise en oeuvre du procédé selon l'invention, le produit déshydratant comprend des cendres volantes silico-alumineuses sèches récupérées dans des filtres lors du fonctionnement d'une centrale thermique classique, c'est-à-dire dans laquelle les produits sont brûlés en masse. Ces cendres se présentent sous la forme d'une poudre fine dont les grains sont généralement inférieurs à 500 µm. En fonction de la fluidité que l'on souhaite obtenir pour le sulfate ferreux on rajoute une quantité comprise entre 25 et 40 % en poids de sulfate ferreux humide. Le mélange ainsi constitué est introduit dans un malaxeur où il se transforme presque instantanément en semoule fluide aisément dosable.

Selon un autre mode de mise en oeuvre de l'invention, le produit déshydratant comporte des cendres volantes provenant du fonctionnement d'une centrale thermique à lit fluidisé circulant. On a constaté que des résultats satisfaisants étaient obtenus en ajoutant une quantité de cendres volantes comprise entre 15 % et 35 % en poids du sulfate ferreux humide à fluidiser.

Selon un troisième mode de mise en oeuvre du procédé selon l'invention, le produit déshydratant comprend des fumées de silice provenant de l'industrie du silicium. Le dosage optimal est obtenu pour une quantité de fumées de silice comprise entre 9 % et 13 % en poids du sulfate ferreux humide.

Bien entendu, l'invention n'est pas limitée aux modes de mise en oeuvre décrits et on peut y apporter des variantes de réalisation sans sortir du cadre de l'invention tel que défini par les revendications.

En particulier, bien que des pourcentages optimums aient été mentionnés, on a constaté que l'efficacité des cendres volantes et des fumées de silice dépendaient de la composition initiale des produits dont résultaient les cendres volantes et les fumées de silice. Pour des cendres volantes à forte proportion de silice et de granulométrie très fine, on a constaté en particulier qu'il était possible d'obtenir des résultats satisfaisants à partir de 10 % en poids de cendres volantes par rapport au poids du sulfate ferreux humide. En revanche, pour des cendres volantes de forte granulométrie, ou ayant une faible teneur en silice, il a été constaté que pour obtenir une fluidisation satisfaisante il était souhaitable d'introduire jusqu'à 60 % de cendres volantes dans le sulfate ferreux humide. Au-delà de 60 % on constate des phénomènes d'agglomération nuisibles au bon écoulement recherché.

De même, en ce qui concerne les fumées de silice, on a constaté que des résultats satisfaisants pouvaient être obtenus à partir de 5 % de fumées de silice et jusqu'à 20 % de fumées de silice.

## Revendications

1. Procédé de fluidisation de sulfate ferreux humide heptahydraté comportant l'étape d'ajouter à du sulfate ferreux humide une quantité suffisante de produit déshydratant, **caractérisé en ce que** le produit déshydratant est un produit à base de silice compris dans le groupe comprenant les cendres volantes et les fumées de silice.

2. Procédé selon la revendication 1, **caractérisé en ce que** le produit déshydratant comprend des cendres volantes selon une quantité comprise entre 10 % en poids et 60 % en poids du sulfate ferreux humide.

3. Procédé selon la revendication 2, **caractérisé en ce que** pour des cendres volantes résultant du fonctionnement d'une centrale thermique classique, la quantité de cendres volantes ajoutée est comprise entre 25 % et 40 % en poids du sulfate ferreux humide.

4. Procédé selon la revendication 2, **caractérisé en ce que** pour des cendres volantes résultant du fonctionnement d'une centrale thermique à lit fluidisé circulant, la quantité de cendres volantes ajoutée est comprise entre 15 % et 35 % en poids du sulfate ferreux humide.

5. Procédé selon la revendication 1, **caractérisé en ce que** le produit déshydratant comprend des fumées de silice selon une quantité comprise entre 5 % et 20 % en poids du sulfate ferreux humide.

6. Procédé selon la revendication 5, **caractérisé en ce que** la quantité de fumées de silice est comprise entre 9% et 13 % en poids du sulfate ferreux humide.
